# EUROPÄISCHE PATENTSCHRIFT

(11) **EP 3 486 966 B1**
(45) Veröffentlichungstag und Bekanntmachung des Hinweises auf die Patenterteilung: **09.12.2020**
(21) Anmeldenummer: 18199228.0
(22) Anmeldetag: 09.10.2018
(51) Int. Cl.: H01M 2/02, B21D 51/26

(54) **VERFAHREN ZUR HERSTELLUNG EINES ZELLENGEHÄUSES FÜR EINE BATTERIEZELLE UND BATTERIEZELLE**
BATTERY CELL AND METHOD FOR THE PREPARATION OF A CELL HOUSING FOR A BATTERY CELL
PROCÉDÉ DE FABRICATION D'UN BOÎTIER D'ÉLÉMENT POUR UN ÉLÉMENT DE BATTERIE ET ÉLÉMENT DE BATTERIE

(30) Priorität: 13.11.2017 DE 102017220115
(43) Veröffentlichungstag der Anmeldung: 22.05.2019
(73) Patentinhaber: Robert Bosch GmbH, 70442 Stuttgart (DE)
(72) Erfinder: Kneule, Friedrich, 71277 Rutesheim (DE); Holz, Dieter, 71563 Affalterbach (DE)

(56) Entgegenhaltungen:
- EP-A1- 1 886 740
- JP-A- 2003 208 876
- US-A1- 2011 300 423

## Beschreibung

Die Erfindung betrifft ein Verfahren zur Herstellung eines Zellengehäuses für eine Batteriezelle aus einem Rohrelement.

### Stand der Technik

Batteriezellen, insbesondere Lithium-Ionen-Zellen und Lithium-Festkörperzellen weisen häufig ein prismatisches oder quaderförmiges Zellengehäuse auf. Dabei werden mehrere Batteriezellen in einem Batteriemodul räumlich nebeneinander angeordnet und elektrisch seriell miteinander verschaltet. Insbesondere quaderförmige Zellengehäuse können räumlich dicht nebeneinander angeordnet werden, ohne dass ungenutzte Freiräume zwischen benachbarten Batteriezellen entstehen.

Zellengehäuse für Batteriezellen sind beispielsweise aus einem Metall, insbesondere aus Aluminium, gefertigt. Zur Vermeidung von Kurzschlüssen zwischen benachbarten Batteriezellen innerhalb eines Batteriemoduls und zur Verhinderung von einer elektrischen Spannung auf angrenzenden Teilen des Batteriemoduls können die metallischen Zellengehäuse außen elektrisch isoliert werden.

Zellengehäuse für Batteriezellen werden beispielsweise durch Fließpressen, insbesondere Rückwärtsfließpressen, hergestellt. Dabei wird das insbesondere metallische Material zur Herstellung des Zellengehäuses mittels eines Stempels verformt. Eine spezielle Ausführungsform des Rückwärtsfließpressen ist das Napfrückwärtsfließpressen.

Zellengehäuse für Batteriezellen können beispielsweise auch durch Tiefziehen hergestellt werden. Dabei wird das insbesondere metallische Material zur Herstellung des Zellengehäuses in einer Presse mittels eines geeigneten Werkzeugs verformt.

Aus der US 2009/0206096 A1 ist ein gattungsgemäßes Verfahren zur Herstellung eines prismatischen Gehäuses bekannt. Das derart hergestellte Gehäuse ist unter anderem als Zellengehäuse für eine Batteriezelle verwendbar. Dabei wird zunächst ein Rohrelement mit einem kreisförmigen Querschnitt derart verformt, dass ein rechteckförmiger Querschnitt entsteht. Anschließend werden die Grundflächen des Rohrelements mit einen Bodenelement sowie mit einem Deckelelement verschlossen. Es entsteht somit ein dreiteilig ausgebildetes Gehäuse.

### Offenbarung der Erfindung

Es wird ein Verfahren zur Herstellung eines insbesondere prismatischen Zellengehäuses für eine Batteriezelle gemäß Anspruch 1 vorgeschlagen. Das Verfahren umfasst die nachfolgend genannten Schritte Zunächst wird ein Rohrelement mit einem zumindest annähernd kreisförmigen Querschnitt bereitgestellt. Das besagte Rohrelement weist beispielsweise die Form eines Hohlzylinders auf und ist rotationssymmetrisch zu einer Längsachse ausgebildet. Eine der Längsachse zugewandte Seite des Rohrelements wird im Folgenden als Innenseite bezeichnet. Eine gegenüberliegende, der Längsachse abgewandte Seite des Rohrelements wird im Folgenden als Außenseite bezeichnet.

Anschließend folgt das Anlegen von genau zwei Dornen an diametral gegenüberliegende Bereiche an der Innenseite des Rohrelements. Die Dorne sind dabei vorzugsweise quaderförmig ausgebildet und erstrecken sich entlang der Längsachse zumindest annähernd über die gesamte Länge des Rohrelements.

Anschließend werden die zwei Dorne voneinander weg bewegt. Dadurch wird das Rohrelement verformt und erhält einen zumindest annähernd rechteckförmigen Querschnitt mit einer ersten Frontseite, einer gegenüberliegenden zweiten Frontseite, einer ersten Stirnseite und einer gegenüberliegenden zweiten Stirnseite.

Die Dorne liegen dabei an den beiden Stirnseiten des Rohrelements an. Die Stirnseiten haben eine geringere Ausdehnung als die Frontseiten. Zwischen den beiden Dornen und zentralen Bereichen der beiden Frontseiten entsteht zunächst ein Hohlraum.

Anschließend erfolgt ein Verschließen einer ersten Grundfläche des Rohrelements. Die erste Grundfläche steht dabei rechtwinklig zu den beiden Stirnseiten und rechtwinklig zu den beiden Frontseiten. Die verschlossene erste Grundfläche bildet dann einen Boden des Zellengehäuses.

Es entsteht somit ein becherartig oder topfartig ausgebildetes, quaderförmiges Zellengehäuse, welches einteilig ausgestaltet ist. Das bedeutet, das Zellengehäuse ist aus einem einzigen Rohrelement hergestellt. Zur Fertigung einer Batteriezelle wird anschließend eine Elektrodeneinheit in das Zellengehäuse eingeführt und eine der ersten Grundfläche gegenüberliegende zweite Grundfläche wird ebenfalls verschlossen.

Gemäß einer vorteilhaften Ausgestaltung der Erfindung wird vor dem Verformen des Rohrelements an der Außenseite des Rohrelements gegenüber von jedem Dorn jeweils ein Klemmbacken angelegt. Das Rohrelement ist somit an zwei Stellen zwischen jeweils einem Dorn und einem Klemmbacken eingespannt und kraftschlüssig gehalten.

Das Rohrelement kann beispielsweise durch Walzen hergestellt und nahtlos gefertigt sein. Das Rohrelement kann aber auch durch Verschweißen eines Blechs entlang einer Längsschweißnaht hergestellt sein, wobei die Längsschweißnaht gerade und parallel zu der Längsachse verläuft. In diesem Fall werden die beiden Dorne und die beiden Klemmbacken vorzugsweise derart angelegt, dass die Längsschweißnaht des Rohrelements sich zwischen einem Dorn und einem Klemmbacken befindet.

Gemäß einer vorteilhaften Ausgestaltung der Erfindung wird nach dem Verformen des Rohrelements ein Füllstück zwischen die Dorne eingebracht. Das Füllstück wird dabei in den Hohlraum eingebracht, welcher zwischen den beiden Dornen und den zentralen Bereichen der beiden Frontseiten des Rohrelements entsteht. Das Füllstück weist einen rechteckförmigen Querschnitt auf und füllt den besagten Hohlraum zumindest annähernd vollständig aus.

Gemäß einer vorteilhaften Weiterbildung der Erfindung wird nach dem Verformen des Rohrelements jeweils ein Prägebacken gegen die erste Frontseite und gegen die zweite Frontseite des Rohrelements gepresst. Die Frontseiten des Rohrelements sind somit zwischen den beiden Prägebacken und den beiden Dornen und gegebenenfalls auch zwischen den beiden Prägebacken und Füllstück eingespannt.

Durch das Pressen der besagten Prägebacken beidseitig gegen die beiden Frontseiten des Rohrelements erfolgt eine Kalibrierung des rechteckförmigen Querschnitts des Rohrelements. Dadurch wird insbesondere eine Rückfederung des Rohrelements von dem rechteckförmigen Querschnitts in Richtung zu dem vorherigen Querschnitt minimiert.

Gemäß einer bevorzugten Ausgestaltung der Erfindung werden zum Verschließen der ersten Grundfläche des Rohrelements Endbereiche der Frontseiten des Rohrelements mittels Schiebern gegeneinander gepresst. Anschließend werden die Endbereiche der Frontseiten miteinander verbunden und bilden den Boden des Zellengehäuses.

Vorzugsweise werden die gegeneinander gepressten Endbereiche der beiden Frontseiten dabei miteinander stoffschlüssig verbunden, insbesondere verschweißt. Dadurch entsteht eine Querschweißnaht, welche sich entlang des Bodens des Zellengehäuses erstreckt.

An dem Boden des Zellengehäuses bilden sich zwei dreieckförmige Taschen, welche zunächst in entgegengesetzte Richtungen von dem Zellengehäuse abstehen. Die beiden Taschen werden dann um 180° gebogen und somit auf den Boden des Zellengehäuses geklappt. Aus der Lebensmittelindustrie sind Verpackungen, insbesondere für Getränke, bekannt, welche auf ähnliche Art gefaltet werden.

Gemäß einer bevorzugten Weiterbildung der Erfindung wird bei der Fertigung der Batteriezelle eine der ersten Grundfläche gegenüberliegende zweite Grundfläche des Rohrelements mittels eines Deckels verschlossen. Somit ist das Zellengehäuse rundum geschlossen.

Gemäß einer vorteilhaften Ausgestaltung der Erfindung wird das Rohrelement derart verformt, dass eine Wandstärke des Rohrelements dabei verringert wird. Das Rohrelement wird also in Richtung senkrecht zu der Längsachse gedehnt, wodurch die Wandstärke verringert wird.

Es wird auch eine Batteriezelle vorgeschlagen, die jedoch nicht Bestandteil der vorliegenden Erfindung ist und die ein Zellengehäuse umfasst, welches mittels des erfindungsgemäßen Verfahrens hergestellt ist. Die Batteriezelle ist beispielsweise eine Lithium-Ionen-Zelle.

### Vorteile der Erfindung

Mittels des erfindungsgemäßen Verfahrens sind Zellengehäuse für Batteriezellen kostengünstig herstellbar. Das erfindungsgemäße Verfahren gestattet darüber hinaus die Herstellung von Zellengehäusen mit verhältnismäßig geringen Wandstärken sowie mit kleinen Kantenradien. Das erfindungsgemäße Verfahren benötigt keinen Stempel im konventionellen Sinn zur Verformung des Rohrelements. Somit sind Zellengehäuse mit verhältnismäßig großer Länge herstellbar, welche aufgrund einer zu geringen Knicksteifigkeit des Stempels mit konventionellen Umformverfahren nicht herstellbar sind. Die geometrischen Abmessungen des herzustellenden Zellengehäuses sind somit annähernd frei wählbar. Auch können Zellengehäuse aus beschichteten Blechen hergestellt werden.

### Kurze Beschreibung der Zeichnungen

Ausführungsformen der Erfindung werden anhand der Zeichnungen und der nachfolgenden Beschreibung näher erläutert.

Es zeigen:
- Figur 1: eine perspektivische Darstellung eines Rohrelements mit kreisförmigem Querschnitt,
- Figur 2: eine Draufsicht auf das Rohrelement aus Figur 1 unmittelbar vor dem Verformen,
- Figur 3: eine Draufsicht auf das Rohrelement aus Figur 2 nach dem Verformen mit rechteckförmigem Querschnitt,
- Figur 4: einen Schnitt durch das Rohrelement aus Figur 3 beim Verschließen einer Grundfläche,
- Figur 5: einen Schnitt durch das Rohrelement aus Figur 3 mit verschlossener Grundfläche und
- Figur 6: eine teiltransparente perspektivische Darstellung einer Batteriezelle.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

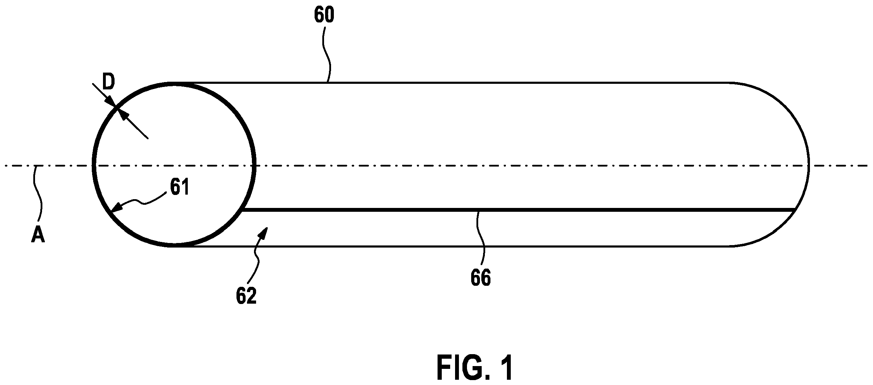

Figur 1 zeigt eine perspektivische Darstellung eines Rohrelements 60 mit einem kreisförmigen Querschnitt. Das Rohrelement 60 ist vorliegend in Form eines Hohlzylinders ausgebildet und ist rotationssymmetrisch zu einer Längsachse A.

Das Rohrelement 60 weist eine der Längsachse A zugewandte Innenseite 61 und eine gegenüberliegende, der Längsachse A abgewandte Außenseite 62 auf. Das Rohrelement 60 weist eine Wandstärke D auf. Ferner ist das Rohrelement 60 entlang einer Längsschweißnaht 66 welche gerade und parallel zu der Längsachse A verläuft, geschweißt.

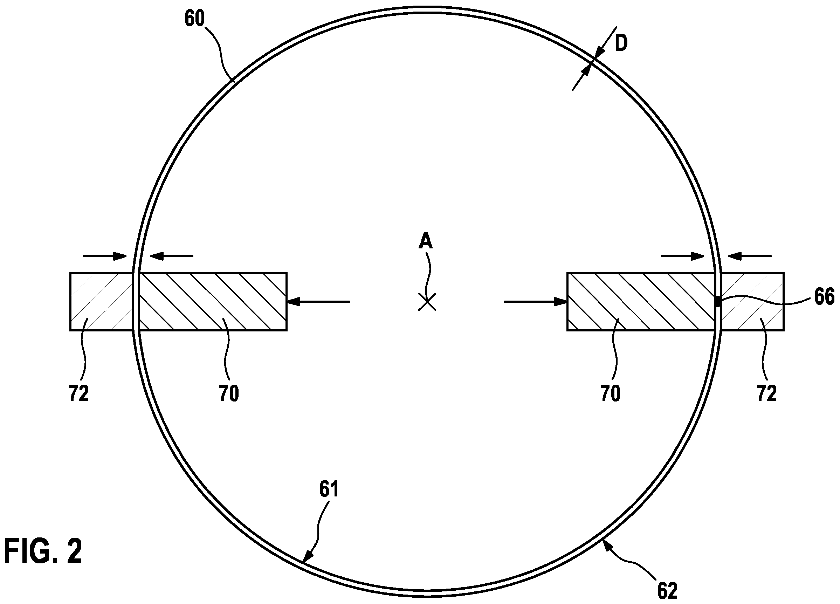

Figur 2 zeigt eine Draufsicht auf das Rohrelement 60 aus Figur 1 unmittelbar vor dem Verformen. An diametral gegenüberliegenden Bereichen an der Innenseite 61 des Rohrelements 60 sind zwei Dorne 70 angelegt. Die Dorne 70 sind dabei quaderförmig ausgebildet und erstrecken sich entlang der Längsachse A annähernd über die gesamte Länge des Rohrelements 60.

An der Außenseite 62 des Rohrelements 60 ist gegenüber von jedem Dorn 70 jeweils ein Klemmbacken 72 angelegt. Das Rohrelement 60 ist somit an zwei Stellen zwischen jeweils einem Dorn 70 und einem Klemmbacken 72 eingespannt und kraftschlüssig gehalten. Die Längsschweißnaht 66 des Rohrelements 60 befindet sich dabei zwischen einem Dorn 70 und einem Klemmbacken 72.

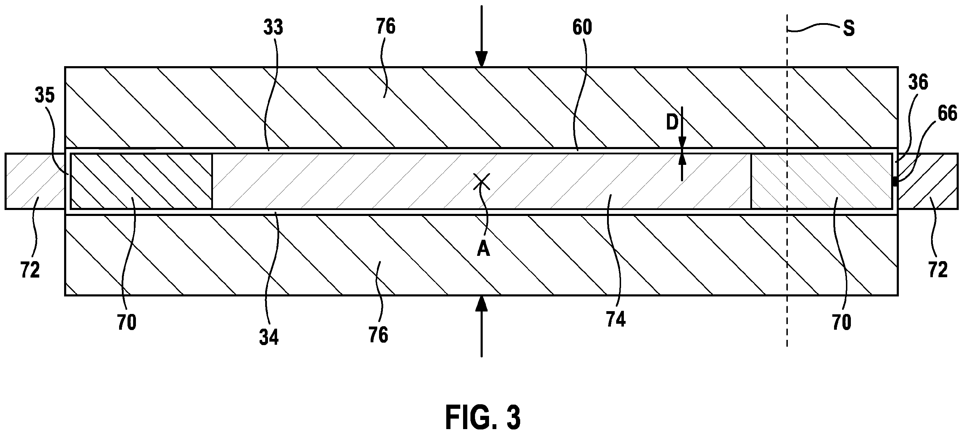

Figur 3 zeigt eine Draufsicht auf das Rohrelement 60 aus Figur 2 nach dem Verformen mit einem rechteckförmigen Querschnitt. Das Rohrelement 60 wird dadurch verformt, dass die zwei Dorne 70 voneinander weg bewegt werden. Das Rohrelement 60 erhält somit den rechteckförmigen Querschnitt mit einer ersten Frontseite 33, einer gegenüberliegenden zweiten Frontseite 34, einer ersten Stirnseite 35 und einer gegenüberliegenden zweiten Stirnseite 36. Die Dorne 70 liegen dabei an den beiden Stirnseiten 35, 36 des Rohrelements 60 an, welche eine geringere Ausdehnung haben als die beiden Frontseiten 33, 34. Die Längsschweißnaht 66 des Rohrelements befindet sich vorliegend an der zweiten Stirnseite 36.

In einen zwischen den beiden Dornen 70 und zentralen Bereichen der beiden Frontseiten 33, 34 entstandenen Hohlraum ist ein Füllstück 74 eingebracht. Das Füllstück 74 weist ebenfalls einen rechteckförmigen Querschnitt auf und füllt den besagten Hohlraum vollständig aus. Gegen die erste Frontseite 33 und gegen die zweite Frontseite 34 des Rohrelements 60 wird jeweils ein Prägebacken 76 gepresst. Die Frontseiten 33, 34 des Rohrelements 60 sind somit zwischen den beiden Prägebacken 76 und den beiden Dornen 70 sowie zwischen den beiden Prägebacken 76 und Füllstück 74 eingespannt.

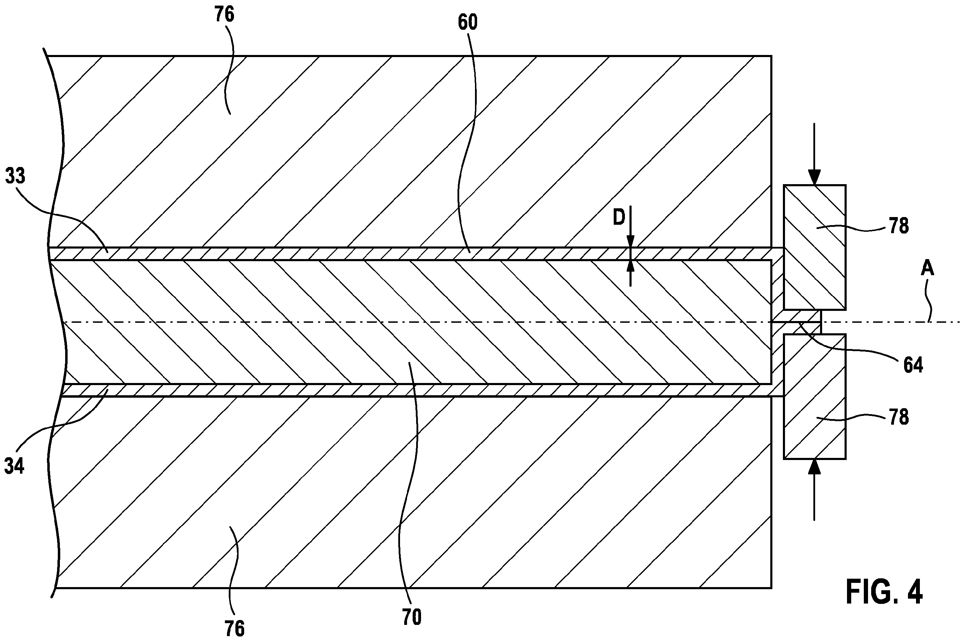

Figur 4 zeigt einen Schnitt durch das Rohrelement 60 entlang der Schnittlinie S aus Figur 3 beim Verschließen einer ersten Grundfläche des Rohrelements 60. Die erste Grundfläche des Rohrelements 60 steht dabei rechtwinklig zu den beiden Stirnseiten 35, 36 und rechtwinklig zu den beiden Frontseiten 33, 34. Die Längsachse A des Rohrelements 60 steht ebenfalls rechtwinklig zu der ersten Grundfläche.

Endbereiche des Rohrelements 60 ragen in Richtung der Längsachse A über die Dorne 70, über die Prägebacken 76 und über das in dieser Darstellung verdeckte Füllstück 74 hinaus. Zum Verschließen der ersten Grundfläche des Rohrelements 60 werden die Endbereiche der Frontseiten 33, 34 des Rohrelements 60 mittels Schiebern 78 gegeneinander gepresst. Die Bewegung der Schieber 78 erfolgt dabei in Richtung aufeinander zu und rechtwinklig zu der Längsachse A.

Durch die besagte Bewegung der Schieber 78 wird aus den Endbereichen der Frontseiten 33, 34 des Rohrelements 60 ein Falz 64 gebildet, welcher rechtwinklig von der ersten Grundfläche des Rohrelements 60 absteht. Der entstandene Falz 64 wird dabei in der hier gezeigten Darstellung kraftschlüssig von den Schiebern 78 gehalten.

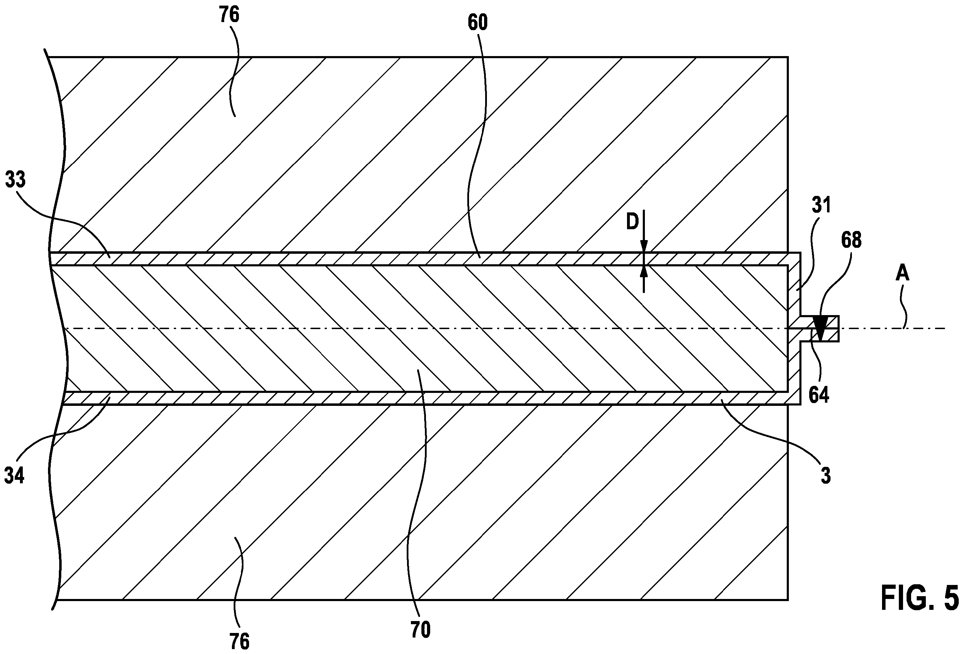

Anschließend werden die gegeneinander gepressten Endbereiche der Frontseiten 33, 34 des Rohrelements 60, welche den Falz 64 bilden, miteinander stoffschlüssig verbunden, insbesondere verschweißt. Durch diese Verbindung der Endbereiche der Frontseiten 33, 34 des Rohrelements 60 miteinander wird die erste Grundfläche des Rohrelements 60 verschlossen. Figur 5 zeigt einen Schnitt durch das Rohrelement 60 aus Figur 3 mit verschlossener Grundfläche.

Die Verbindung der Endbereiche der Frontseiten 33, 34 des Rohrelements 60 geschieht beispielsweise mittels einer Rollnahtschweißung, wobei in den Falz 64 eine Querschweißnaht 68 eingebracht wird. Die Querschweißnaht 68 verläuft rechtwinklig zu den Frontseiten 33, 34 und rechtwinklig zu der Längsachse A. Die verschlossene erste Grundfläche des Rohrelements 60 bildet dann einen Boden 31 eines Zellengehäuses 3. Dadurch entsteht das becherartig oder topfartig ausgebildete, quaderförmige Zellengehäuse 3, welches aus dem Rohrelement 60 hergestellt und einteilig ausgestaltet ist. Die Querschweißnaht 68 erstreckt sich entlang des Bodens 31 des Zellengehäuses 3.

Nach der Verbindung der Endbereiche der Frontseiten 33, 34 des Rohrelements 60, also nach dem Einbringen der Querschweißnaht 68 in den Falz 64, steht der Falz 64 rechtwinklig von der ersten Grundfläche des Rohrelements 60, beziehungsweise von dem Boden 31 des Zellengehäuses 3, ab. Der Falz wird dann um 90° gebogen und liegt damit parallel zu dem Boden 31 an dem Boden 31 an.

Dadurch bilden sich zwei dreieckförmige Taschen, durch welche der Falz 64 hindurch verläuft. Die beiden Taschen stehen zunächst in entgegengesetzte Richtungen von dem Zellengehäuse 3 ab. Die beiden Taschen werden dann um 180° gebogen und somit auf den Boden 31 des Zellengehäuses 3 geklappt. Aus der Lebensmittelindustrie sind Verpackungen, insbesondere für Getränke, bekannt, welche auf ähnliche Art gefaltet werden.

Zur Fertigung einer Batteriezelle 2 wird anschließend eine Elektrodeneinheit in das Zellengehäuse 3 eingeführt. Anschließend wird eine der ersten Grundfläche gegenüberliegende zweite Grundfläche des Rohrelements 60 ebenfalls verschlossen. Die zweite Grundfläche des Rohrelements 60 wird dabei vorliegend mittels eines flachen Deckels 32 verschlossen. Somit ist das Zellengehäuse 3 rundum geschlossen und die Elektrodeneinheit ist von dem Zellengehäuse 3 umgeben.

In das Zellengehäuse 3 wird auch ein vorliegend flüssiger Elektrolyt eingefüllt, welcher dann die Elektrodeneinheit innerhalb des Zellengehäuses 3 umgibt. Der flüssige Elektrolyt kann beispielsweise vor Aufbringen des Deckels 32 eingefüllt werden. Der Elektrolyt kann auch nach Aufbringen des Deckels 32 durch eine Öffnung, welche beispielsweise in dem Deckel 32 vorgesehen ist, eingefüllt werden. Die besagte Öffnung wird dann nach dem Einfüllen des Elektrolyten verschlossen.

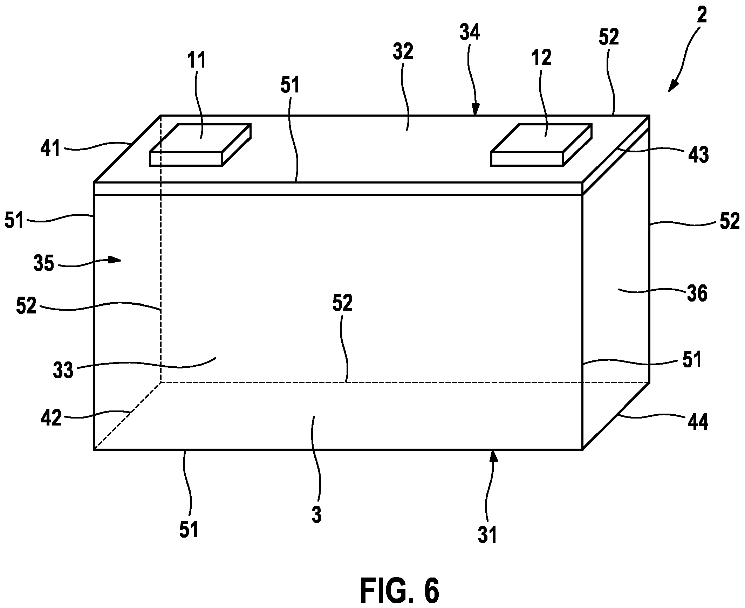

Figur 6 zeigt eine teiltransparente perspektivische Darstellung einer Batteriezelle 2 mit dem quaderförmig ausgebildeten Zellengehäuse 3. Das Zellengehäuse 3 der Batteriezelle 2 weist sechs Seiten mit drei verschieden großen Flächeninhalten auf, wobei jeweils zwei Seiten mit gleich großen Flächeninhalten einander gegenüber liegen. Die Seiten mit den größten Flächeninhalten sind die erste Frontseite 33 und die zweite Frontseite 34. Die Seiten mit den kleinsten Flächeninhalten sind die erste Stirnseite 35 und zweite Stirnseite 36. Die verbleibenden Seiten mit den mittelgroßen Flächeninhalten sind der Boden 31 und der Deckel 32.

Die Batteriezelle 2 umfasst ein negatives Terminal 11 und ein positives Terminal 12. Über die beiden Terminals 11, 12 kann eine von der Batteriezelle 2 zur Verfügung gestellte Spannung abgegriffen werden. Ferner kann die Batteriezelle 2 über die beiden Terminals 11, 12 auch geladen werden. Die beiden Terminals 11, 12 sind beabstandet voneinander an dem Deckel 32 angeordnet. Vorliegend befindet sich das negative Terminal 11 benachbart zu der ersten Stirnseite 35, und das positive Terminal 12 befindet sich benachbart zu der zweiten Stirnseite 36. Die Terminals 11, 12 sind elektrisch mit der Elektrodeneinheit 10 verbunden, die hier nicht dargestellt ist.

Das quaderförmige Zellengehäuse 3 weist acht Kanten auf. An die erste Frontseite 33 des Zellengehäuses 3 grenzende vier Kanten an, welche als erste Frontkanten 51 bezeichnet werden. An die zweite Frontseite 34 des Zellengehäuses 3 grenzende vier Kanten an, welche als zweite Frontkanten 52 bezeichnet werden.

Das quaderförmige Zellengehäuse 3 weist vier weitere Kanten auf, welche an je eine der beiden Stirnseiten 35, 36 und an den Boden 31 sowie an den Deckel 32 angrenzen. Dabei grenzt eine erste Längskante 41 an den Deckel 32 und an die erste Stirnseite 35 an. Eine zweite Längskante 42 grenzt an den Boden 31 und an die erste Stirnseite 35 an. Eine dritte Längskante 43 grenzt an den Deckel 32 und die an zweite Stirnseite 36 an. Eine vierte Längskante 44 grenzt an den Boden 31 und an die zweite Stirnseite 36 an.

Die beiden Taschen, welche zuvor um 180° gebogen und somit auf den Boden 31 des Zellengehäuses 3 geklappt wurden, befinden sich an der zweiten Längskante 42 sowie an der vierten Längskante 44. Die besagten Taschen sind, ebenso wie der Falz 64 in dieser Darstellung nicht gezeigt.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zur Herstellung eines Zellengehäuses (3) für eine Batteriezelle (2), umfassend folgende Schritte:
Bereitstellen eines Rohrelements (60) mit einem zumindest annähernd kreisförmigen Querschnitt;
Anlegen von genau zwei Dornen (70) an diametral gegenüberliegende Bereiche an einer Innenseite (61) des Rohrelements (60);
Voneinander weg Bewegen der genau zwei Dorne (70), wodurch das Rohrelement (60) verformt wird und einen zumindest annähernd rechteckförmigen Querschnitt mit einer ersten Frontseite (33), einer gegenüberliegenden zweiten Frontseite (34), einer ersten Stirnseite (35) und einer gegenüberliegenden zweiten Stirnseite (36) erhält;
Verschließen einer ersten Grundfläche des Rohrelements (60).

2. Verfahren nach Anspruch 1, wobei
vor dem Verformen des Rohrelements (60) an einer Außenseite (62) des Rohrelements (60) gegenüber von jedem Dorn (70) jeweils ein Klemmbacken (72) angelegt wird.

3. Verfahren nach Anspruch 2, wobei
die Dorne (70) und die Klemmbacken (72) derart angelegt werden, dass eine Längsschweißnaht (66) des Rohrelements (60) sich zwischen einem Dorn (70) und einem Klemmbacken (72) befindet.

4. Verfahren nach einem der vorstehenden Ansprüche, wobei
nach dem Verformen des Rohrelements (60) ein Füllstück (74) zwischen die Dorne (70) eingebracht wird.

5. Verfahren nach einem der vorstehenden Ansprüche, wobei
nach dem Verformen des Rohrelements (60) jeweils ein Prägebacken (76) gegen die erste Frontseite (33) und gegen die zweite Frontseite (34) gepresst wird.

6. Verfahren nach einem der vorstehenden Ansprüche, wobei
zum Verschließen der ersten Grundfläche des Rohrelements (60) Endbereiche der Frontseiten (33, 34) mittels Schiebern (78) gegeneinander gepresst werden.

7. Verfahren nach Anspruch 6, wobei
die gegeneinander gepressten Endbereiche der Frontseiten (33, 34) miteinander stoffschlüssig verbunden werden.

8. Verfahren nach einem der vorstehenden Ansprüche, wobei
eine der ersten Grundfläche gegenüberliegende zweite Grundfläche des Rohrelements (60) mittels eines Deckels (32) verschlossen wird.

9. Verfahren nach einem der vorstehenden Ansprüche, wobei
das Rohrelement (60) derart verformt wird, dass eine Wandstärke (D) des Rohrelements (60) verringert wird.

## Claims

1. Method for producing a cell housing (3) for a battery cell (2), comprising the following steps:
providing a tubular element (60) having at least approximately circular cross section;
applying exactly two mandrels (70) at diametrically opposite regions to an inner side (61) of the tubular element (60);
moving exactly two mandrels (70) away from one another, with the result that the tubular element (60) is deformed and an at least approximately rectangular cross section with a first front side (33), an opposite second front side (34), a first end side (35) and an opposite second end side (36) is obtained;
closing a first base surface of the tubular element (60).

2. Method according to Claim 1, wherein
before deforming the tubular element (60), in each case one clamping jaw (72) is applied to an outer side (62) of the tubular element (60) opposite each mandrel (70).

3. Method according to Claim 2, wherein
the mandrels (70) and the clamping jaws (72) are applied in such a way that a longitudinal weld seam (66) of the tubular element (60) is situated between a mandrel (70) and a clamping jaw (72).

4. Method according to one of the preceding claims,
wherein
after deforming the tubular element (60), a filler piece (74) is introduced between the mandrels (70) .

5. Method according to one of the preceding claims,
wherein
after deforming the tubular element (60), in each case one stamping jaw (76) is pressed against the first front side (33) and against the second front side (34).

6. Method according to one of the preceding claims,
wherein
to close the first base surface of the tubular element (60), end regions of the front sides (33, 34) are pressed against one another by means of slides (78).

7. Method according to Claim 6, wherein
the end regions of the front sides (33, 34) that are pressed against one another are connected to one another in an integrally bonded manner.

8. Method according to one of the preceding claims,
wherein
a second base surface, opposite the first base surface, of the tubular element (60) is closed by means of a cover (32).

9. Method according to one of the preceding claims,
wherein
the tubular element (60) is deformed in such a way that a wall thickness (D) of the tubular element (60) is reduced.

## Revendications

1. Procédé de fabrication d'un boîtier de cellule (3) pour une cellule de batterie (2), comprenant les étapes suivantes :
fourniture d'un élément tubulaire (60) ayant une section transversale au moins approximativement circulaire ;
application d'exactement deux mandrins (70) au niveau de zones diamétralement opposées sur un côté intérieur (61) de l'élément tubulaire (60) ;
éloignement mutuel des exactement deux mandrins (70), moyennant quoi l'élément tubulaire (60) est façonné et obtient une section transversale de forme au moins approximativement rectangulaire avec un premier côté avant (33), un deuxième côté avant (34) opposé, un premier côté frontal (35) et un deuxième côté frontal (36) opposé ;
fermeture d'une première surface de base de l'élément tubulaire (60).

2. Procédé selon la revendication 1, une mâchoire de serrage (72) étant respectivement appliquée au niveau d'un côté extérieur (62) de l'élément tubulaire (60) à l'opposé de chaque mandrin (70), avant le façonnage de l'élément tubulaire (60).

3. Procédé selon la revendication 2, les mandrins (70) et les mâchoires de serrage (72) étant appliqués de telle sorte qu'un cordon de soudure longitudinal (66) de l'élément tubulaire (60) se trouve entre un mandrin (70) et une mâchoire de serrage (72).

4. Procédé selon l'une des revendications précédentes, une pièce de remplissage (74) étant introduite entre les mandrins (70) après le façonnage de l'élément tubulaire (60) .

5. Procédé selon l'une des revendications précédentes, une mâchoire d'estampage (76) étant respectivement pressée contre le premier côté avant (33) et contre le deuxième côté avant (34) après le façonnage de l'élément tubulaire (60).

6. Procédé selon l'une des revendications précédentes, les zones d'extrémité des côtés avant (33, 34) étant compressées l'une contre l'autre au moyen de coulisseaux (78) en vue de fermer la première surface de base de l'élément tubulaire (60).

7. Procédé selon la revendication 6, les zones d'extrémité des côtés avant (33, 34) compressées l'une contre l'autre étant reliées entre elles par fusion de matières.

8. Procédé selon l'une des revendications précédentes, une deuxième surface de base de l'élément tubulaire (60), opposée à la première surface de base, étant fermée au moyen d'un couvercle (32).

9. Procédé selon l'une des revendications précédentes, l'élément tubulaire (60) étant façonné de telle sorte qu'une épaisseur de paroi (D) de l'élément tubulaire (60) est réduite.
